# EUROPÄISCHE PATENTSCHRIFT

(11) **EP 3 618 996 B1**
(45) Veröffentlichungstag und Bekanntmachung des Hinweises auf die Patenterteilung: **15.07.2026**
(21) Anmeldenummer: 18721800.3
(22) Anmeldetag: 03.05.2018
(51) Int. Cl.: B23K 26/04, B23K 26/08, B23K 26/38

(54) **VERFAHREN UND ABSTANDSEINSTELLEINRICHTUNG ZUR EINSTELLUNG DES ABSTANDS EINES LASERBEARBEITUNGSKOPFS ZU EINER WERKSTÜCKOBERFLÄCHE**
METHOD AND DISTANCE ADJUSTING DEVICE FOR ADJUSTING THE DISTANCE FROM A LASER MACHINING HEAD TO A WORKPIECE SURFACE
PROCÉDÉ ET DISPOSITIF DE RÉGLAGE DE DISTANCE CONÇU POUR RÉGLER LA DISTANCE D'UNE TÊTE D'USINAGE AU LASER PAR RAPPORT À UNE SURFACE DE PIÈCE

(30) Priorität: 03.05.2017 DE 102017207421
(43) Veröffentlichungstag der Anmeldung: 11.03.2020
(73) Patentinhaber: TRUMPF Werkzeugmaschinen SE + Co. KG, 71254 Ditzingen (DE)
(72) Erfinder: STÜCKEL, Markus, 71254 Ditzingen (DE); DEMEL, Peter, 70597 Stuttgart (DE); LACHNER, Florian, 71636 Ludwigsburg (DE); MEINDL, Ulrich, 71111 Waldenbuch (DE); OTT, Martin, 71254 Ditzingen (DE); KNORRECK, Daniel, 71394 Kernen im Remstal (DE)
(74) Vertreter: Trumpf Patentabteilung
(86) Internationale Anmeldenummer: PCT/EP2018/061400
(87) Internationale Veröffentlichungsnummer: WO 2018/202803

(56) Entgegenhaltungen:
- EP-A2- 2 135 701
- WO-A1-94/04968
- DE-A1- 102011 006 447
- US-A1- 2008 210 886
- US-A1- 2012 298 633

## Beschreibung

Die Erfindung betrifft ein Verfahren zur Einstellung des Abstands eines Laserbearbeitungskopfs zu einer Werkstückoberfläche eines zu bearbeitenden Werkstücks sowie eine Abstandseinstelleinrichtung zur Einstellung des Abstands eines Laserbearbeitungskopfs zu einer Werkstückoberfläche eines zu bearbeitenden Werkstücks, siehe Ansprüche 1 und 5.

Werkstücke, beispielsweise Rohre, oder auch flache oder dreidimensional verformte Bleche, können in einem Laserschneidverfahren bearbeitet werden, wobei ein Laserschneidkopf schräg zur Werkstückoberfläche ausgerichtet ist. Bisher ist es bekannt, den Abstand des Laserbearbeitungskopfs zu dem Werkstück zu erfassen und bei einer Abweichung des erfassten Werts von einem Sollwert den schräg gestellten Laserbearbeitungskopf relativ zum Werkstück in Strahlrichtung zu verfahren.

Abweichungen des Abstands des Laserbearbeitungskopfs zum Werkstück ergeben sich zum einen aus technologisch bedingten Änderungen während der Bearbeitung, z.B. weil unterschiedliche Schneidaufgaben mit unterschiedlichen Schneidabständen durchgeführt werden müssen, zum anderen aus Fehlern des Werkstücks oder bei Fehlern bei der Einspannung des Werkstücks. Im Idealfall, d.h. die tatsächliche Werkstückgeometrie entspricht exakt der Geometrie eines angenommenen Bezugswerkstücks, entstehen keine Regelbewegungen aufgrund von Fehlern des Werkstücks. Von der Regelung werden somit ausschließlich die technologisch bedingten Schneidabstandsänderungen eingestellt. Diese Bewegungen müssen beim Schrägschnitt in Strahlrichtung erfolgen, damit es zu keinem Konturfehler kommt.

Trotz sehr genauer Werkstücke und bestmöglicher Einstellung der Werkstücke, kommt es immer wieder zu Konturfehlern bei der Schrägschnittbearbeitung von Werkstücken. Es hat sich herausgestellt, dass hierfür die Kompensation von Werkstückfehlern in Strahlrichtung verantwortlich ist.

EP 2 135 701 A2 , offenbarend den Oberbegriff des Anspruchs 1, beschreibt ein Verfahren zur vorausschauenden Brennerhöhenregelung zur Einstellung der Höhe eines auf einem Portal einer numerisch gesteuerten Schneidemaschine montierten Schneidbrenners in Bezug auf eine auf dem Schneidtisch der numerisch gesteuerten Schneidemaschine montierte Platte.

Aufgabe der vorliegenden Erfindung ist es daher, ein Verfahren und eine Anordnung zur Einstellung des Abstands eines Laserbearbeitungskopfs zu einer Werkstückoberfläche bereitzustellen, die eine genauere und zuverlässigere Werkstückbearbeitung erlauben.

Gelöst wird diese Aufgabe erfindungsgemäß durch ein Verfahren zur Einstellung des Abstands eines Laserbearbeitungskopfs zu einer Werkstückoberfläche eines zu bearbeitenden Werkstücks entsprechend Anspruch 1, mit den Verfahrensschritten:
a) Vorgabe eines ersten Sollwerts für den Abstand des Laserbearbeitungskopfs zur Werkstückoberfläche in einer Richtung senkrecht zur Werkstückoberfläche;
b) Vorgabe eines zweiten Sollwerts für den Abstand des Laserbearbeitungskopfs zur Werkstückoberfläche, wobei der zweite Sollwert zumindest eine erste Komponente in Richtung senkrecht zur Werkstückoberfläche umfasst;
c) Erfassen einer mit dem Abstand des Laserbearbeitungskopfs zu der Werkstückoberfläche in Richtung senkrecht zur Werkstückoberfläche in Beziehung stehende Abstandsgröße;
d) Zuführen des ersten und zweiten Sollwerts und der erfassten Abstandsgröße oder einer damit in Beziehung stehenden Größe zu einer Abstandseinstelleinrichtung zur Einstellung des Abstands des Laserbearbeitungskopfs zur Werkstückoberfläche senkrecht zur Werkstückoberfläche unter Berücksichtigung des ersten und des zweiten Sollwerts und der Abstandsgröße oder der damit in Beziehung stehenden Größe.

Der Begriff "Wert" ist dabei weit zu verstehen. Er kann dabei einen Skalar oder eine Vektorgröße oder dgl. bezeichnen.

Bei der mit dem Abstand des Laserbearbeitungskopfs zu der Werkstückoberfläche in Richtung senkrecht zur Werkstückoberfläche in Beziehung stehenden Abstandsgröße kann es sich unmittelbar um den Abstand senkrecht zur Werkstückoberfläche handeln. Es kann sich jedoch auch um einen anderen Abstand handeln, aus dem der Abstand senkrecht zur Werkstückoberfläche ermittelt werden kann. Beispielsweise kann der Abstand in Strahlrichtung gemessen werden, wenn ein Laserbearbeitungskopf in einem Anstellwinkel ungleich 90° zur Werkstückoberfläche ausgerichtet ist, und daraus in Kenntnis des Anstellwinkels, in dem der Laserkopf zur Werkstückoberfläche ausgerichtet ist, der Abstand senkrecht zur Werkstückoberfläche ermittelt werden.

Das erfindungsgemäße Verfahren berücksichtigt die Ursache der Abstandsänderung zwischen dem Laserbearbeitungskopf und der Werkstückoberfläche. Technologisch bedingte Änderungen des Bearbeitungsabstands, insbesondere des Schneidabstands, und Fehler in der Werkstückoberfläche führen zu unterschiedlichen Bewegungen des Laserbearbeitungskopfs relativ zur Werkstückoberfläche. Sollwertänderungen des Bearbeitungsabstands sind im Vorfeld bekannt, beispielsweise über Lasertechnologietabellen. Diese Sollwertänderungen können durch Vorgabe des ersten Sollwerts berücksichtigt werden. Zusätzlich können sich durch Änderung der Technologie technologisch bedingte Sollwertänderungen ergeben. Diese Änderungen können durch Vorgabe des zweiten Sollwerts berücksichtigt werden. Parallel dazu wird der Abstand zwischen dem Laserbearbeitungskopf und der Werkstückoberfläche kontinuierlich erfasst und eventuelle Änderungen aufgrund von Störungen, beispielsweise aufgrund von Abweichungen der Werkstückkontur von einer Sollkontur, werden ebenso wie die Sollwertänderungen einer Abstandseinstelleinrichtung zugeführt.

Mit anderen Worten werden mit dem erfindungsgemäßen Verfahren Abstandsänderungen z.B. in Strahlrichtung (X-Z-Richtung, wobei die X-Richtung parallel zur Werkstückoberfläche und die Z-Richtung senkrecht zur Werkstückoberfläche liegt) für technologisch bedingte Abstandsänderungen, beispielsweise weil ein Laserschneidvorgang vorteilhafterweise mit einem größeren oder kleineren Abstand zur Werkstückoberfläche durchgeführt wird, und in Z-Richtung für Abstandsänderungen aufgrund von Werkstücksänderungen aufgeteilt.

Gemäß einer Verfahrensvariante kann vorgesehen sein, dass unter Berücksichtigung der Abstandsgröße oder der damit in Beziehung stehenden Größe und des zweiten Sollwerts eine Korrekturgröße ermittelt wird, die ebenso wie der erste Sollwert einer ersten Regelanordnung der Abstandseinstelleinrichtung zugeführt wird. Die Korrekturgröße kann beispielsweise durch eine numerische Steuereinrichtung ermittelt werden. Insbesondere kann die Korrekturgröße dadurch ermittelt werden, dass die erfasste Abstandsgröße und der zweite Sollwert voneinander subtrahiert werden und einer numerischen Steuerung zugeführt werden.

Eine noch genauere Abstandsregelung ergibt sich, wenn der zweite Sollwert der ersten Regeleinrichtung zugeführt wird.

Insbesondere kann vorgesehen sein, dass die Korrekturgröße, der erste Sollwert und der zweite Sollwert oder dessen erste Komponente, insbesondere dessen Komponente in Z-Richtung, addiert werden. Das Additionsresultat kann dann in der ersten Regelanordnung verwendet werden, um eine genaue Abstandsregelung durchführen zu können.

Gemäß einer bevorzugten Verfahrensvariante kann vorgesehen sein, dass ein dritter Sollwert für den Abstand eines Bearbeitungspunkts auf der Werkstückoberfläche zu dem Laserbearbeitungskopf und der zweite Sollwert oder eine zweite Komponente des zweiten Sollwerts in derselben Richtung wie der dritte Sollwert einer zweiten Regelanordnung zugeführt werden. Somit kann nicht nur der Abstand eines Laserbearbeitungskopfes senkrecht zur Werkstückoberfläche geregelt werden, sondern auch eine Regelung des Abstands des Laserbearbeitungskopfs von einem Bearbeitungspunkt parallel zur Werkstückoberfläche geregelt werden.

Gemäß einer Verfahrensvariante kann vorgesehen sein, dass die zweite Komponente unter Berücksichtigung eines Anstellwinkels des Laserbearbeitungskopfs ermittelt wird. Insbesondere kann die zweite Komponente aus dem zweiten Sollwert ermittelt werden, wenn dieser in Strahlrichtung vorgegeben wird. Beispielsweise kann die zweite Komponente ermittelt werden, indem der zweite Sollwert mit tan(α) multipliziert wird, wobei α der Anstellwinkel ist. Sollte die Werkstückoberfläche im Maschinenkoordinatensystem unter einem Winkel γ zur X-Achse in der X-Z-Ebene stehen, so dass der Laserbearbeitungskopf im Maschinenkoordinatensystem einen Winkel β = a+ γ einnimmt, sollte der zweite Sollwert mit tan(β) multipliziert werden.

In den Rahmen der Erfindung fällt außerdem eine Abstandseinstelleinrichtung zur Einstellung des Abstands eines Laserbearbeitungskopfs zu einer Werkstückoberfläche eines zu bearbeitenden Werkstücks entsprechend dem Anspruch 5, mit einer ersten Regelanordnung, der ein erster Sollwert für den Abstand des Laserbearbeitungskopfs zur Werkstückoberfläche in einer Richtung senkrecht zur Werkstückoberfläche und ein zweiter Sollwert für den Abstand des Laserbearbeitungskopfs zur Werkstückoberfläche, wobei der zweite Sollwert zumindest eine erste Komponente in Richtung senkrecht zur Werkstückoberfläche umfasst, und eine erfasste mit dem Abstand des Laserbearbeitungskopfs zu der Werkstückoberfläche in Beziehung stehende Abstandsgröße oder eine damit in Beziehung stehenden Größe zugeführt werden und einem Additionsglied, in dem der erste und zweite Sollwert oder dessen erste Komponente addiert werden. Mit einer solchen Abstandseinstelleinrichtung ist es möglich, auf unterschiedlich bedingte Abstandsänderungen von Laserbearbeitungskopf zu Werkstückoberfläche zu reagieren und insbesondere sicher zu stellen, dass der Bearbeitungspunkt stets an der richtigen Stelle auf der Werkstückoberfläche ist.

In einer solchen Anordnung können Abstandsänderungen des Laserbearbeitungskopfs zu einem Werkstück je nach Ursache der Abstandsänderung berücksichtigt werden. Somit kann vermieden werden, dass technologisch bedingte Schneidabstandsänderungen ausgeregelt werden.

Es kann eine Korrekturgrößenermittlungseinrichtung vorgesehen sein, der der zweite Sollwert und ein erfasster Abstand des Laserbearbeitungskopfs zur Werkstückoberfläche, insbesondere die mit dem Abstand des Laserbearbeitungskopfs zu der Werkstückoberfläche in Beziehung stehende Abstandsgröße oder die damit in Beziehung stehenden Größe, zugeführt werden. Der erfasste Abstand des Laserbearbeitungskopfs zur Werkstückoberfläche kann dabei beispielsweise in einer Richtung senkrecht zur Werkstückoberfläche gemessen bzw. erfasst werden. Alternativ ist es denkbar, den Abstand des Laserbearbeitungskopfs zur Werkstückoberfläche in Strahlrichtung des Laserbearbeitungskopfs zu erfassen.

Weiterhin kann ein Verzögerungsglied vorgesehen sein, das den zweiten Sollwert verzögert, ehe er der Korrekturgrößenermittlungseinrichtung zugeführt wird. Dadurch wird sichergestellt, dass die Korrekturgrößenermittlungseinrichtung den richtigen neuen Sollwert hat und den richtigen Korrekturwert ermittelt. Ein Über- und Unterschwingen bei der Regelung kann dadurch weitestgehend vermieden werden.

Entsprechend der Erfindung ist eine Erfassungseinrichtung zur Erfassung des Abstands von Laserkopf zur Werkstückoberfläche vorgesehen.

Ein Ausgang der Korrekturgrößenermittlungseinrichtung kann dem Additionsglied zugeführt sein. Somit können durch das Additionsglied die Korrekturgröße sowie der erste und zweite Sollwert berücksichtigt werden und anschließend in einer Regelanordnung, insbesondere der ersten Regelanordnung, verwendet werden.

Ein Ausgang der Korrekturgrößenermittlungseinrichtung kann einem Additionsglied am Ausgang der ersten Regelanordnung zugeführt sein, dem auch eine Stellgröße der ersten Regelanordnung zugeführt ist. Dadurch kann ein sehr schneller Eingriff in die Regelstrecke erfolgen. Insbesondere kann die erste Regelanordnung im Wesentlichen überbrückt werden.

Weiterhin kann eine zweite Regelanordnung vorgesehen sein, der ein dritter Sollwert für den Abstand eines Bearbeitungspunkts auf der Werkstückoberfläche zu dem Laserbearbeitungskopf und der zweite Sollwert oder eine zweite Komponente des zweiten Sollwerts in derselben Richtung wie der dritte Sollwert einer zweiten Regelanordnung zugeführt werden. Somit kann auch der Abstand eines Bearbeitungspunkts auf der Werkstückoberfläche zu dem Laserbearbeitungskopf geregelt werden.

Weiterhin kann eine Komponentenermittlungseinrichtung vorgesehen sein, der der zweite Sollwert zugeführt wird und die eine Komponente des zweiten Sollwerts ermittelt, die der zweiten Regelanordnung zugeführt wird. Beispielsweise kann der zweite Sollwert mit einer trigonometrischen Funktion multipliziert werden, je nachdem, in welche Richtung der zweite Sollwert vorgegeben wird. Die trigonometrische Funktion kann dabei den Anstellwinkel des Laserbearbeitungskopfs berücksichtigen.

Die erste und/oder zweite Regelanordnung kann einen Lagerregler aufweisen.

Weiterhin kann vorgesehen sein, dass die erste und/oder zweite Regelanordnung eine Vorsteuerung aufweist. Somit können beispielsweise Änderungen aufgrund einer Sollwertänderung über die Vorsteuerung berücksichtigt werden, während Änderungen aufgrund einer Abweichung des Werkstücks von einer Sollkontur über eine Regelung berücksichtigt werden können. Beispielsweise kann durch eine Vorsteuerung eine Sollgeschwindigkeit ermittelt werden. Dies ermöglicht die Berücksichtigung des aufgrund des Sollwertverlaufs zu erwartenden Stellgrößenbedarfs. Somit kann das Führungsverhalten verbessert werden, ohne die Stabilität des Systems zu gefährden.

Weiterhin kann die Regelanordnung eine Erfassungseinheit zur Erfassung einer Regelgröße aufweisen. Insbesondere kann die Erfassungseinheit ausgebildet sein, kapazitiv den Abstand des Laserbearbeitungskopfs zu dem Werkstück, insbesondere zur Werkstückoberfläche, zu erfassen.

Die Abstandseinstelleinrichtung kann bspw. auch an 5- oder 6-Achsmaschinen eingesetzt werden. Dabei ist dann noch eine zusätzliche Regelanordnung analog zur Regelanordnung für die Y-Achse notwendig und der Winkel β entspricht dann einem Raumwinkel in X, Y, und Z und nicht mehr einem Winkel in der X-Z-Ebene.

Weitere Merkmale und Vorteile der Erfindung ergeben sich aus der nachfolgenden detaillierten Beschreibung eines Ausführungsbeispiels der Erfindung, anhand der Figuren der Zeichnung.

In der schematischen Zeichnung ist ein Ausführungsbeispiel der Erfindung dargestellt und in der nachfolgenden Beschreibung näher erläutert.

Es zeigen:
- Figur 1: schematisch einen Laserbearbeitungskopf, mit dem ein Werkstück bearbeitet wird;
- Figur 2: eine Anordnung zur Einstellung des Abstands eines schräg zu einer Werkstückoberfläche ausgerichteten Laserbearbeitungskopfs;
- Figur 3: eine weitere Anordnung zur Einstellung des Abstands eines schräg zu einer Werkstückoberfläche ausgerichteten Laserbearbeitungskopfs.

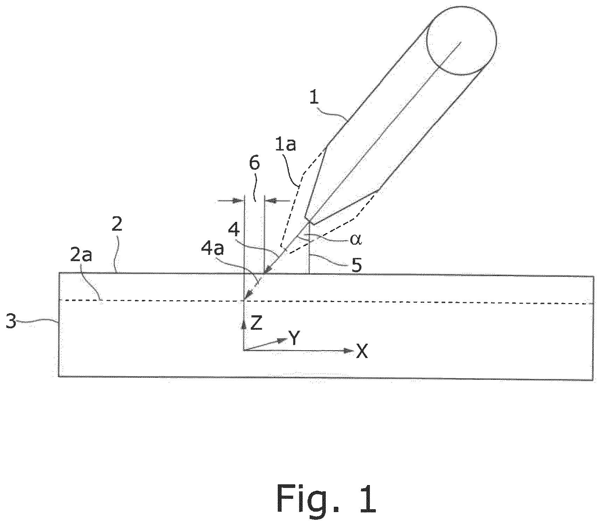

Die Figur 1 zeigt schematisch einen Laserbearbeitungskopf 1, der als Laserschneidkopf ausgebildet ist. Der Laserbearbeitungskopf 1 ist unter einem Anstellwinkel a schräg zu einer Normalen der Werkstückoberfläche 2 eines Werkstücks 3 ausgerichtet. Dies bedeutet, dass der Bearbeitungsabstand 4 in Strahlrichtung eine Komponente in X-Richtung, d.h. parallel zur Werkstückoberfläche 2, und eine Komponente in Z-Richtung, d.h. senkrecht zur Werkstückoberfläche 2, aufweist. Der Laserbearbeitungskopf 1 weist einen Abstand 5 zur Werkstückoberfläche 2 auf. Dabei entsprechen sich in diesem Ausführungsbeispiel das Koordinatensystem des Werkstücks 3 und des Laserbearbeitungskopfs 1 (als Teil einer Laserbearbeitungsmaschine mit mehreren Maschinenachsen, bspw. in X-, Y- und Z-Richtung).

Das Werkstück 3 weicht von einer Sollkontur ab. Die Sollkontur des Werkstücks 3 würde an der Stelle 2a eine Werkstückoberfläche aufweisen. Entsprechend würde sich der Laserbearbeitungskopf an der Position 1a, die gestrichelt dargestellt ist, befinden, um einen Bearbeitungsabstand 4a, der als Sollwert vorgegeben wird, einzustellen. Da die reale Werkstückoberfläche 2 von der Solllage gemäß Bezugsziffer 2a abweicht, wird auch der Laserschneidkopf 1 anders positioniert, um den Sollwert des Bearbeitungsabstands einzustellen. Dadurch ergibt sich eine Konturabweichung 6.

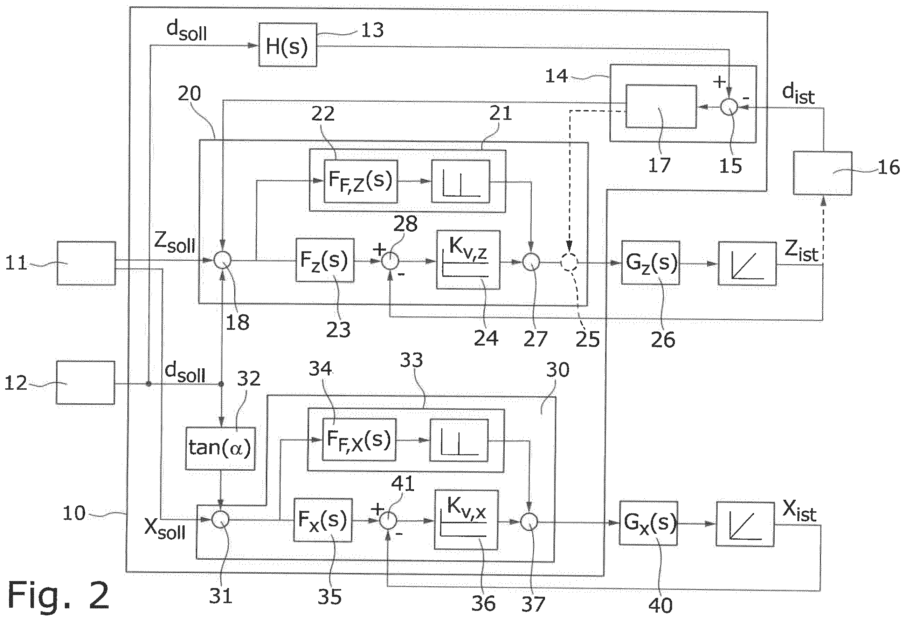

Im Ausführungsbeispiel von Figur 2 wird zunächst davon ausgegangen, dass sich das Werkstück 3 entlang der X- und insbesondere auch der Y-Richtung des Koordinatensystems des Laserbearbeitungskopfs 1 erstreckt, und die Solllage 2a der Werkstückoberfläche 2 einer Position mit Z=0 im Koordinatensystem des Laserbearbeitungskopfs 1 entspricht, so dass der erste Sollwert Zₛₒₗₗ des Laserbearbeitungskopfs 1 (bzw. der dazugehörigen Maschinenachse) gerade dem Abstand 5 des Laserbearbeitungskopfs 1 zur Solllage 2a der Werkstückoberfläche 2 entspricht.

Die Figur 2 zeigt eine Abstandseinstelleinrichtung 10, der durch einen Interpolator 11 ein erster Sollwert Zₛₒₗₗ für den Abstand des Laserbearbeitungskopfs 1 zur Werkstückoberfläche 2 in einer Richtung senkrecht zur Werkstückoberfläche zugeführt wird. Der Interpolator 11 liest dabei den ersten Sollwert aus einem NC-Programm aus.

Durch eine Technologie-Steuerung 12 wird der Abstandseinstelleinrichtung 10 ein zweiter Sollwert dₛₒₗₗ für den Abstand des Laserbearbeitungskopfs 1 zur Werkstückoberfläche 2 vorgegeben. Der zweite Sollwert dₛₒₗₗ weist zumindest eine erste Komponente in Richtung senkrecht zur Werkstückoberfläche 2 auf. Der zweite Sollwert dₛₒₗₗ wird zunächst einem Verzögerungsglied 13 zugeführt, von wo aus er zu einer Korrekturgrößenermittlungseinrichtung 14 gelangt. Die Korrekturgrößenermittlungseinrichtung 14 weist ein Rechenglied 15 auf, wo von dem verzögerten zweiten Sollwert dₛₒₗₗ bzw. der ersten Komponente davon ein von einer Erfassungseinrichtung 16 gemessener oder ermittelter Abstandswert dᵢₛₜ subtrahiert wird. Der Ausgangswert des Rechenglieds 15 gelangt zu einer numerischen Steuerung 17, die eine Korrekturgröße ausgibt, die einem Additionsglied 18 einer ersten Regelanordnung 20 zugeführt wird. Dem Additionsglied 18 wird weiterhin der erste Sollwert Zₛₒₗₗ und der zweite Sollwert dₛₒₗₗ zugeführt. Idealerweise ist die Korrekturgröße, die von der Korrekturgrößenermittlungseinrichtung 14 kommt, gleich null, so dass diesbezüglich kein Fehler ausgeregelt werden muss. Die erste Regelanordnung 20 weist eine Vorsteuerung 21, insbesondere eine Geschwindigkeitsvorsteuerung mit einem Feedforwardglied 22 auf. Weiterhin weist die erste Regelanordnung 20 ein Verzögerungsglied 23 auf, das verhindert, dass der Lagerregler 24 gegen die Vorsteuerung 21 arbeitet.

Am Ausgang der ersten Regelanordnung 20 ist weiterhin ein Additionsglied 25 vorgesehen, dem unmittelbar ein Ausgang der Korrekturgrößenermittlungseinrichtung 14 zugeführt ist. Somit wird durch die Korrekturgrößenermittlungseinrichtung 14 ein eigener Sollwert generiert, über den ein schneller Eingriff in die Regelung erfolgen kann. Der Ausgang der ersten Regelanordnung 20 wird einer Regelstrecke 26 zugeführt, durch die der Abstand des Laserbearbeitungskopfs 1 senkrecht zur Werkstückoberfläche 2 eingestellt wird. Dieser Abstand Zᵢₛₜ wird durch die bereits erwähnte Erfassungseinrichtung 16 ermittelt, wobei die Erfassungseinrichtung 16 den Abstandswert dᵢₛₜ als mit dem Abstand Zᵢₛₜ des Laserbearbeitungskopfs 1 senkrecht zur Werkstückoberfläche 2 in Beziehung stehende Größe ausgibt. Dabei kann der Abstandswert dᵢₛₜ der Abstand Zᵢₛₜ selbst sein.

Zu beachten ist, dass dₛₒₗₗ und dᵢₛₜ schon senkrecht zur Werkstückoberfläche angegeben sein oder erfasst werden können, z.B. wenn Zᵢₛₜ direkt mittels kapazitiver Abstandsmessung der Düse zu einem metallischen Werkstück, wie Blech oder Rohr, erfasst wird. Dann sind dᵢₛₜ und Zᵢₛₜ gleich, im Falle eines Werkstücks bei Z=0.

Möglich ist aber auch eine Abstandsmessung in einer anderen Richtung, die nicht senkrecht zur Werkstückoberfläche ist, z.B. in Richtung der Laserstrahlrichtung mit einem Laserabstandsmesser. Dann sind dᵢₛₜ und dₛₒₗₗ Abstände in Strahlrichtung. In beiden Fällen ist dᵢₛₜ eine mit dem Abstand Zᵢₛₜ in Beziehung stehende Größe. Diese kann der Abstandseinstelleinrichtung 10 zugeführt werden.

Es ist bspw. aber auch denkbar, dass dᵢₛₜ unter einem Winkel zur Werkstückoberfläche erfasst wird, z.B. in Strahlrichtung, aber nicht direkt der Abstandseinstelleinrichtung 10 zugeführt wird sondern nur die senkrechte Komponente von dᵢₛₜ zugeführt wird, also eine mit dᵢₛₜ in Beziehung stehende Größe.

Man kann aus einer Abstandsmessung in Strahlrichtung den Abstand senkrecht zur Werkstückoberfläche ermitteln, da der Winkel des Laserbearbeitungskopfs zumindest zur Soll-Werkstückoberfläche bekannt ist.

Wird dᵢₛₜ bspw. in Richtung der Laserstrahlrichtung erfasst, dann ist dᵢₛₜ proportional zu Zᵢₛₜ, wobei die Proportionalitätskonstante vom Winkel von dᵢₛₜ zu Zᵢₛₜ bzw. der Senkrechten der Werkstückoberfläche abhängt.

Durch den Interpolator 11 wird außerdem eine dritte Sollgröße Xₛₒₗₗ aus dem NC-Programm ausgelesen und der Abstandseinstelleinrichtung 10 zugeführt. Insbesondere wird der dritte Sollwert Xₛₒₗₗ einer zweiten Regelanordnung 30 zugeführt und zwar einem Additionsglied 31. Dem Additionsglied 31 wird außerdem eine zweite Komponente des zweiten Sollwerts dₛₒₗₗ zugeführt, wobei die zweite Komponente durch eine Komponentenermittlungseinrichtung 32 ermittelt wird. Der Komponentenermittlungseinrichtung 32 kann beispielsweise ein Anstellwinkel a des Laserkopfs 1 vorgegeben werden und der zweite Sollwert dₛₒₗₗ kann mit einer trigonometrischen Funktion multipliziert werden.

Die zweite Regelanordnung 30 ist mit Ausnahme des Additionsglieds 25 analog zur ersten Regelanordnung 20 aufgebaut und weist demnach eine Vorsteuerung 33 mit einem Feedforwardglied 34, einem Verzögerungsglied 35 und einem Lagerregler 36 auf. Am Ausgang des Lagerreglers 36 liegt eine Stellgröße vor, die im Additionsglied 37 mit einem Ausgangswert der Vorsteuerung 33 addiert wird. Am Ausgang des Additionsglieds 37 liegt somit eine korrigierte Stellgröße vor, die der Regelstrecke 40 zugeführt wird. Im Additionsglied 37 wird die Stellgröße des Reglers 36 mit einem Vorsteuerwert beaufschlagt. Analog wird in der ersten Regelanordnung im Additionsglied 27 die Stellgröße des Lagerreglers 24 mit einem Vorsteuerwert der Vorsteuerung 21 addiert, so dass am Ausgang des Additionsglieds 27 eine korrigierte Stellgröße vorliegt.

Durch die zweite Regelanordnung 30 kann der Abstand des Laserbearbeitungskopfs 1 in einer Richtung parallel zur Werkstückoberfläche 2 zu einem Bearbeitungspunkt auf der Werkstückoberfläche 2 geregelt werden. Der tatsächliche Abstand Xᵢₛₜ wird erfasst und der zweiten Regelanordnung 30 an der Stelle 41 zugeführt. Entsprechend wird der Wert Zᵢₛₜ der ersten Regelanordnung 20 an der Stelle 28 zugeführt.

Im Fall, dass die Solllage 2a der Werkstückoberfläche 2 zu einer Position mit Z=0 im Koordinatensystem des Laserbearbeitungskopfs 1 versetzt ist, muss als erster Sollwert Zₛₒₗₗ der Abstand 5 zur Werkstückoberfläche 2 zusammen mit einem Versatz zwischen Z=0 und der Z-Position der Solllage 2a der Werkstückoberfläche 2 zugeführt werden.

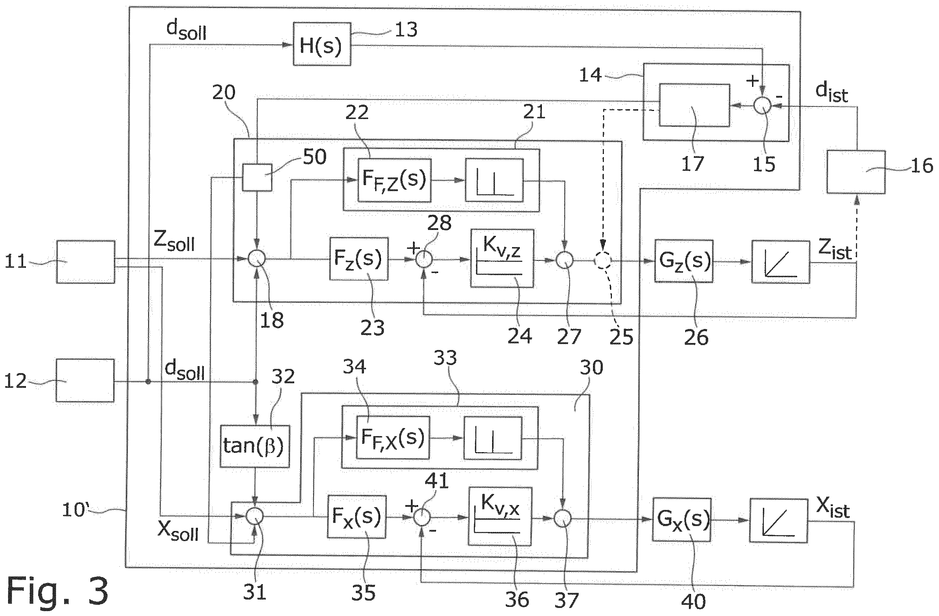

Die Figur 3 zeigt eine Abstandseinstelleinrichtung 10', die in großen Teilen der Abstandseinstelleinrichtung 10 von Figur 2 entspricht.

Die Regelung mit dem zusätzlichen Block 50 erlaubt, dass nicht nur in Z-Richtung des Maschinenkoordinatensystems (Koordinatensystem des Laserbearbeitungskopfes) geregelt werden kann, sondern auch in eine X-Z-Richtung. Im Fall von Fig. 3 kann bspw. die Solllage der zu bearbeitenden Werkstückoberfläche unter einem Winkel γ zur X-Achse in der X-Z-Ebene stehen (bspw. ein Abschnitt eines dreidimensional geformten Bleches) und es ist trotzdem möglich den Abstand des Laserbearbeitungskopfs senkrecht zur Werkstückoberfläche zu regeln, statt nur in Z-Richtung wie in Fig. 2. In diesem Fall muss die Komponentenermittlungseinrichtung 32 den zweiten Sollwert dₛₒₗₗ mit einer trigonometrischen Funktion multiplizieren, in die der Anstellwinkel α des Laserkopfs 1 und der Winkel γ der Solllage der Werkstückoberfläche einfließen. Insbesondere sollte in diesem Fall dₛₒₗₗ mit tan (β) multipliziert werden, wobei β=α+γ. Innerhalb des Werkstückkoordinatensystems hat sich damit nichts verändert: man regelt einmal in Strahlrichtung und einmal senkrecht zur Oberfläche, aber man muss die Drehung des Werkstücks um den Winkel γ im Koordinatensystem des Laserbearbeitungskopfs 1 (und damit der Maschine) berücksichtigen, so dass auch die Regelung senkrecht zum Werkstück nicht nur in Z-Richtung, sondern in X- und Z-Richtung erfolgt. Der erste Sollwert in einer Richtung senkrecht zur Werkstückoberfläche kann somit Komponenten in unterschiedlichen Achsrichtungen eines Maschinenkoordinatensystems (Koordinatensystem des Laserkopfs) aufweisen. Gegebenenfalls ergibt sich der vorgegebene erste Sollwert somit aus Sollwerten in unterschiedlichen Achsrichtungen des Maschinenkoordinatensystems. Anstelle der Solllage der Werkstückoberfläche, die bspw. aus CAD/CAM-Daten oder einer Teach-Bahn bekannt ist, kann der Winkel γ auch aus einer Messung der Werkstückoberfläche ermittelt werden.

Zusätzlich kann die Abstandseinstelleinrichtung 10 bspw. auch an 5- oder 6-Achsmaschinen eingesetzt werden. Dabei ist dann noch eine zusätzliche Regelanordnung analog zur Regelanordnung 30 für die Y-Achse notwendig und der Winkel β entspricht dann einem Raumwinkel in X, Y, und Z und nicht mehr einem Winkel in der X-Z-Ebene.

## Patentansprüche

1. Verfahren zur Einstellung des Abstands eines Laserbearbeitungskopfs (1) zu einer Werkstückoberfläche (2) eines zu bearbeitenden Werkstücks (3), wobei der Laserbearbeitungskopf (1) schräg zur Werkstückoberfläche (2) ausgerichtet ist, mit den Verfahrensschritten:
a. Vorgabe eines ersten Sollwerts (Zₛₒₗₗ) für den Abstand des Laserbearbeitungskopfs (1) zur Werkstückoberfläche (2) in einer Richtung senkrecht zur Werkstückoberfläche (2), wobei der erste Sollwert (Zₛₒₗₗ) aus einem NC-Progamm ausgelesen wird;
das Verfahren **gekennzeichnet durch**:
b. Vorgabe eines zweiten Sollwerts (dₛₒₗₗ) für den Abstand des Laserbearbeitungskopfs (1) zur Werkstückoberfläche (2) durch eine Technologie-Steuerung (12), wobei der zweite Sollwert (dₛₒₗₗ) zumindest eine erste Komponente in Richtung senkrecht zur Werkstückoberfläche (2) umfasst;
c. Messen einer mit dem Abstand (Zᵢₛₜ) des Laserbearbeitungskopfs (1) zu der Werkstückoberfläche (2) in Richtung senkrecht zur Werkstückoberfläche (2) in Beziehung stehenden Abstandsgröße (dᵢₛₜ);
d. Zuführen des ersten und des zweiten Sollwerts (Zₛₒₗₗ, dₛₒₗₗ) und der gemessenen Abstandsgröße (dᵢₛₜ) oder einer damit in Beziehung stehenden Größe zu einer ersten Regelanordnung (20) einer Abstandseinstelleinrichtung (10), wobei die Abstandseinstelleinrichtung (10) weiter ein Additionsglied (18) umfasst, in dem der erste und der zweite Sollwert oder dessen erste Komponente addiert werden, zur Einstellung des Abstands des Laserbearbeitungskopfs (1) zur Werkstückoberfläche (2) senkrecht zur Werkstückoberfläche unter Berücksichtigung des ersten und des zweiten Sollwerts (Zₛₒₗₗ, dₛₒₗₗ) und der Abstandsgröße (dᵢₛₜ) oder der damit in Beziehung stehenden Größe, wobei der Ausgang der ersten Regelanordnung (20) einer Regelstrecke (26) zugeführt wird, durch die der Abstand des Laserbearbeitungskopfs (1) senkrecht zur Werkstückoberfläche (2) eingestellt wird.

2. Verfahren nach Anspruch 1, **dadurch gekennzeichnet, dass** unter Berücksichtigung der Abstandsgröße (dᵢₛₜ) oder der damit in Beziehung stehenden Größe und des zweiten Sollwerts (dₛₒₗₗ) eine Korrekturgröße ermittelt wird, die ebenso wie der erste Sollwert (Zₛₒₗₗ) der ersten Regelanordnung (20) der Abstandseinstelleinrichtung (10) zugeführt wird.

3. Verfahren nach einem der vorhergehenden Ansprüche, **dadurch gekennzeichnet, dass** der zweite Sollwert (dₛₒₗₗ) der ersten Regeleinrichtung (20) zugeführt wird.

4. Verfahren nach einem der vorhergehenden Ansprüche, **dadurch gekennzeichnet, dass** ein dritter Sollwert (Xₛₒₗₗ) für den Abstand eines Bearbeitungspunkts auf der Werkstückoberfläche (2) zu dem Laserbearbeitungskopf (1) und der zweite Sollwert (dₛₒₗₗ) oder eine zweite Komponente des zweiten Sollwerts (dₛₒₗₗ) in derselben Richtung wie der dritte Sollwert (Xₛₒₗₗ) einer zweiten Regelanordnung (30) zugeführt werden.

5. Abstandseinstelleinrichtung (10) zur Einstellung des Abstands eines Laserbearbeitungskopfs (1) zu einer Werkstückoberfläche (2) eines zu bearbeitenden Werkstücks (3), wobei der Laserbearbeitungskopf (1) schräg zur Werkstückoberfläche (2) ausgerichtet ist, mit einer Erfassungseinrichtung (16) zur Erfassung des Abstands des Laserbearbeitungskopfs (1), und mit einer ersten Regelanordnung (20), die einen Interpolator (11) zum Auslesen eines ersten Sollwerts (Zₛₒₗₗ) für den Abstand des Laserbearbeitungskopfs (1) zur Werkstückoberfläche (2) in einer Richtung senkrecht zur Werkstückoberfläche aus einem NC-Programm und eine Tecnnologie-Steuerung (12) zum Vorgeben eines zweiten Sollwerts (dₛₒₗₗ) für den Abstand des Laserbearbeitungskopfs (1) zur Werkstückoberfläche (2) umfasst, wobei der zweite Sollwert (dₛₒₗₗ) zumindest eine erste Komponente in Richtung senkrecht zur Werkstückoberfläche (2) umfasst, und die erfasste mit dem Abstand (Zᵢₛₜ) des Laserbearbeitungskopfs (1) zu der Werkstückoberfläche (2) in Beziehung stehende Abstandsgröße (dᵢₛₜ) oder eine damit in Beziehung stehenden Größe zugeführt werden, mit einem Additionsglied (18), in dem der erste und der zweite Sollwert oder dessen erste Komponente addiert werden, wobei der Ausgang der ersten Regelanordnung (20) einer Regelstrecke (26) zugeführt wird, durch die der Abstand des Laserbearbeitungskopfs (1) senkrecht zur Werkstückoberfläche (2) eingestellt wird.

6. Abstandseinstelleinrichtung nach Anspruch 5, **dadurch gekennzeichnet, dass** eine Korrekturgrößenermittlungseinrichtung (14) vorgesehen ist, der der zweite Sollwert (dₛₒₗₗ) und die erfasste mit dem Abstand des Laserbearbeitungskopfs (1) zu der Werkstückoberfläche (2) in Beziehung stehende Abstandsgröße (dᵢₛₜ) oder eine damit in Beziehung stehenden Größe zugeführt werden.

7. Abstandseinstelleinrichtung nach Anspruch 6, **dadurch gekennzeichnet, dass** ein Verzögerungsglied (13) vorgesehen ist, das den zweiten Sollwert (dₛₒₗₗ) verzögert, ehe er der Korrekturgrößenermittlungseinrichtung (14) zugeführt wird.

8. Abstandseinstelleinrichtung nach einem der vorhergehenden Ansprüche 6 bis 7, **dadurch gekennzeichnet, dass** ein Ausgang der Korrekturgrößenermittlungseinrichtung (14) dem Additionsglied (18) zugeführt ist.

9. Abstandseinstelleinrichtung nach einem der vorhergehenden Ansprüche 6 bis 8, **dadurch gekennzeichnet, dass** ein Ausgang der Korrekturgrößenermittlungseinrichtung (14) einem Additonsglied (25) am Ausgang der ersten Regelanordnung (20) zugeführt ist, dem auch eine Stellgröße der ersten Regelanordnung (20) zugeführt ist.

10. Abstandseinstelleinrichtung nach einem der vorhergehenden Ansprüche 5 bis 9, **dadurch gekennzeichnet, dass** eine zweite Regelanordnung (30) vorgesehen ist, der ein dritter Sollwert (Xₛₒₗₗ) für den Abstand eines Bearbeitungspunkts auf der Werkstückoberfläche (2) zu dem Laserbearbeitungskopf (1) und der zweite Sollwert (dₛₒₗₗ) oder eine zweite Komponente des zweiten Sollwerts (dₛₒₗₗ) in derselben Richtung wie der dritte Sollwert (Xₛₒₗₗ) einer zweiten Regelanordnung (30) zugeführt werden.

11. Abstandseinstelleinrichtung nach Anspruch 10, **dadurch gekennzeichnet, dass** eine Komponentenermittlungseinrichtung (32) vorgesehen ist, der der zweite Sollwert (dₛₒₗₗ) zugeführt wird und die eine Komponente des zweiten Sollwerts (dₛₒₗₗ) ermittelt, die der zweiten Regelanordnung (30) zugeführt wird.

12. Abstandseinstelleinrichtung nach einem der vorhergehenden Ansprüche 10 bis 11, **dadurch gekennzeichnet, dass** die erste und/oder zweite Regelanordnung (20, 30) einen Lageregler (24, 36) aufweist.

13. Abstandseinstelleinrichtung nach einem der vorhergehenden Ansprüche 10 bis 12, **dadurch gekennzeichnet, dass** die erste oder zweite Regelanordnung (20, 30) eine Vorsteuerung (21, 33) aufweist.

## Claims

1. A method for adjusting the distance of a laser machining head (1) to a workpiece surface (2) of a workpiece (3) to be machined, wherein the laser machining head (1) is oriented diagonally to the workpiece surface (2), with the following method steps:
a. specifying a first target value (Zₛₒₗₗ) for the distance of the laser machining head (1) to the workpiece surface (2) in a direction perpendicular to the workpiece surface (2), wherein the first target value (Zₛₒₗₗ) is read out from an NC program;
the method is **characterized by**:
b. specifying a second target value (dₛₒₗₗ) for the distance of the laser machining head (1) to the workpiece surface (2) by a technology controller (12), wherein the second target value (dₛₒₗₗ) comprises at least a first component in a direction perpendicular to the workpiece surface (2);
c. measuring a distance variable (dᵢₛₜ) related to the distance (Zᵢₛₜ) of the laser machining head (1) to the workpiece surface (2) in a direction perpendicular to the workpiece surface (2);
d. supplying the first and the second target value (Zₛₒₗₗ, dₛₒₗₗ) and the measured distance variable (dᵢₛₜ), or a variable that is related thereto, to a first regulating arrangement (20) of a distance adjusting device (10), wherein the distance adjusting device (10) further comprises an addition member (18), in which the first and the second target value, or its first component, are added, for adjusting the distance of the laser machining head (1) to the workpiece surface (2) perpendicular to the workpiece surface, the first and the second target value (Zₛₒₗₗ, dₛₒₗₗ) and the distance variable (dᵢₛₜ) or the variable related thereto, being taken into account in the process, wherein the output of the first regulating arrangement (20) is fed to a controlled loop (26) via which the distance of the laser machining head (1) perpendicular to the workpiece surface (2) is adjusted.

2. The method according to claim 1, **characterized in that**, taking into account the distance variable (dᵢₛₜ) or the variable related thereto and the second target value (dₛₒₗₗ), a correction variable is determined which is supplied to the first regulating arrangement (20) of the distance adjusting device (10) just as the first target value (Zₛₒₗₗ) was.

3. The method according to any one of the preceding claims, **characterized in that** the second target value (dₛₒₗₗ) is supplied to the first regulating device (20).

4. The method according to any one of the preceding claims, **characterized in that** a third target value (Xₛₒₗₗ) for the distance of a machining point on the workpiece surface (2) to the laser machining head (1) and the second target value (dₛₒₗₗ), or a second component of the second target value (dₛₒₗₗ), is supplied to a second regulating arrangement (30) in the same direction as the third target value (Xₛₒₗₗ).

5. A distance adjusting device (10) for adjusting the distance of a laser machining head (1) to a workpiece surface (2) of a workpiece (3) to be machined, wherein the laser machining head (1) is oriented diagonally to the workpiece surface (2), with a detection device (16) for detecting the distance of the laser machining head (1), and with a first regulating arrangement (20) comprising an interpolator (11) for reading out, from an NC program, a first target value (Zₛₒₗₗ) for the distance of the laser machining head (1) to the workpiece surface (2) in a direction perpendicular to the workpiece surface, and a technology controller (12) for specifying a second target value (dₛₒₗₗ) for the distance of the laser machining head (1) to the workpiece surface (2), wherein the second target value (dₛₒₗₗ) comprises at least a first component in the direction perpendicular to the workpiece surface (2), and the detected distance variable (dᵢₛₜ) related to the distance (Zᵢₛₜ) of the laser machining head (1) to the workpiece surface (2), or a variable related thereto, are supplied, with an addition member (18) in which the first and the second target value, or its first component, are added, wherein the output of the first regulating arrangement (20) is supplied to a controlled loop (26) via which the distance of the laser machining head (1) perpendicular to the workpiece surface (2) is adjusted.

6. The distance adjusting device according to claim 5, **characterized in that** a correction variable determining device (14) is provided to which the second target value (dₛₒₗₗ) and the detected distance variable (dᵢₛₜ) related to the distance of the laser machining head (1) to the workpiece surface (2), or a variable related thereto, are supplied.

7. The distance adjusting device according to claim 6, **characterized in that** a delaying member (13) is provided which delays the second target value (dₛₒₗₗ) before it is supplied to the correction variable determining device (14).

8. The distance adjusting device according to any one of the preceding claims 6 to 7, **characterized in that** an output of the correction variable determining device (14) is supplied to the addition member (18).

9. The distance adjusting device according to any one of the preceding claims 6 to 8, **characterized in that** an output of the correction variable determining device (14) is supplied to an addition member (25) at the output of the first regulating arrangement (20), the addition member also being supplied with a control variable of the first regulating arrangement (20).

10. The distance adjusting device according to any one of the preceding claims 5 to 9, **characterized in that** a second regulating arrangement (30) is provided, to which a third target value (Xₛₒₗₗ) for the distance of a machining point on the workpiece surface (2) to the laser machining head (1) and the second target value (dₛₒₗₗ), or a second component of the second target value (dₛₒₗₗ), are supplied in the same direction as the third target value (Xₛₒₗₗ) of a second regulating arrangement (30).

11. The distance adjusting device according to claim 10, **characterized in that** a component determining device (32) is provided, to which the second target value (dₛₒₗₗ) is supplied and which determines a component of the second target value (dₛₒₗₗ) which is supplied to the second regulating arrangement (30).

12. The distance adjusting device according to any one of the preceding claims 10 to 11, **characterized in that** the first and/or second regulating arrangement (20, 30) has a position regulator (24, 36).

13. The distance adjusting device according to any one of the preceding claims 10 to 12, **characterized in that** the first or second regulating arrangement (20, 30) has an upstream controller (21, 33).

## Revendications

1. Procédé de réglage de la distance d'une tête d'usinage laser (1) par rapport à une surface de pièce (2) d'une pièce (3) à usiner, dans lequel la tête d'usinage laser (1) est orientée obliquement par rapport à la surface de pièce (2), comprenant les étapes de procédé suivantes :
a. la spécification d'une première valeur de consigne (Zₛₒₗₗ) pour la distance de la tête d'usinage laser (1) par rapport à la surface de pièce (2) dans une direction perpendiculaire à la surface de pièce (2), dans laquelle la première valeur de consigne (Zₛₒₗₗ) est lue à partir d'un programme NC ;
le procédé étant **caractérisé par** :
b. la spécification d'une deuxième valeur de consigne (dₛₒₗₗ) pour la distance de la tête d'usinage laser (1) par rapport à la surface de pièce (2) par une commande technologique (12), dans laquelle la deuxième valeur de consigne (dₛₒₗₗ) comprend au moins une première composante dans la direction perpendiculaire à la surface de pièce (2) ;
c. la mesure d'une grandeur de distance (dᵢₛₜ) en relation avec la distance (Zᵢₛₜ) de la tête d'usinage laser (1) par rapport à la surface de pièce (2) dans la direction perpendiculaire à la surface de pièce (2) ;
d. la transmission de la première et de la deuxième valeur de consigne (Zₛₒₗₗ, dₛₒₗₗ) et de la grandeur de distance (dᵢₛₜ) mesurée ou d'une grandeur en relation avec celle-ci à un premier agencement de régulation (20) d'un dispositif de réglage de distance (10), dans lequel le dispositif de réglage de distance (10) comprend en outre un élément d'addition (18) dans lequel la première et la deuxième valeur de consigne ou sa première composante sont additionnées, pour régler la distance de la tête d'usinage laser (1) par rapport à la surface de pièce (2) perpendiculairement à la surface de pièce en tenant compte de la première et de la deuxième valeur de consigne (Zₛₒₗₗ, dₛₒₗₗ) et de la grandeur de distance (dᵢₛₜ) ou de la grandeur en relation avec celle-ci, dans laquelle la sortie du premier agencement de régulation (20) est transmise à un système commandé (26), par lequel la distance de la tête d'usinage laser (1) est réglée perpendiculairement à la surface de pièce (2).

2. Procédé selon la revendication 1, **caractérisé en ce qu'**une grandeur de correction est déterminée en tenant compte de la grandeur de distance (dᵢₛₜ) ou de la grandeur en relation avec celle-ci et de la deuxième valeur de consigne (dₛₒₗₗ), ladite grandeur de correction étant, de la même manière que la première valeur de consigne (Zₛₒₗₗ), qui est transmise au premier agencement de régulation (20) du dispositif de réglage de distance (10).

3. Procédé selon l'une quelconque des revendications précédentes, **caractérisé en ce que** la deuxième valeur de consigne (dₛₒₗₗ) est transmise au premier dispositif de régulation (20).

4. Procédé selon l'une quelconque des revendications précédentes, **caractérisé en ce qu'**une troisième valeur de consigne (Xₛₒₗₗ) pour la distance d'un point d'usinage sur la surface de pièce (2) par rapport à la tête d'usinage laser (1) et la deuxième valeur de consigne (dₛₒₗₗ) ou une deuxième composante de la deuxième valeur de consigne (dₛₒₗₗ) dans la même direction que la troisième valeur de consigne (Xₛₒₗₗ) sont transmises à un deuxième agencement de régulation (30).

5. Dispositif de réglage de distance (10) destiné à régler la distance d'une tête d'usinage laser (1) par rapport à une surface de pièce (2) d'une pièce (3) à usiner, dans lequel la tête d'usinage laser (1) est orientée obliquement par rapport à la surface de pièce (2), comprenant un dispositif de détection (16) destiné à détecter la distance de la tête d'usinage laser (1), et comprenant un premier agencement de régulation (20), qui comprend un interpolateur (11) destiné à lire une première valeur de consigne (Zₛₒₗₗ) pour la distance de la tête d'usinage laser (1) par rapport à la surface de pièce (2) dans une direction perpendiculaire à la surface de pièce à partir d'un programme NC, et une commande technologique (12) destinée à spécifier une deuxième valeur de consigne (dₛₒₗₗ) pour la distance de la tête d'usinage laser (1) par rapport à la surface de pièce (2), dans lequel la deuxième valeur de consigne (dₛₒₗₗ) comprend au moins une première composante dans la direction perpendiculaire à la surface de pièce (2), et auxquelles sont transmises la grandeur de distance (dᵢₛₜ) détectée en relation avec la distance (Zᵢₛₜ) de la tête d'usinage laser (1) par rapport à la surface de pièce (2) ou une grandeur en relation avec celle-ci, comprenant un élément d'addition (18), dans lequel la première et la deuxième valeur de consigne ou sa première composante sont additionnées, dans lequel la sortie du premier agencement de régulation (20) est transmise à un système commandé (26), par lequel la distance de la tête d'usinage laser (1) est réglée perpendiculairement à la surface de pièce (2).

6. Dispositif de réglage de distance selon la revendication 5, **caractérisé en ce qu'**un dispositif de détermination de grandeur de correction (14) est prévu, auquel sont transmises la deuxième valeur de consigne (dₛₒₗₗ) et la grandeur de distance (dᵢₛₜ) détectée en relation avec la distance de la tête d'usinage laser (1) par rapport à la surface de pièce (2) ou une grandeur en relation avec celle-ci.

7. Dispositif de réglage de distance selon la revendication 6, **caractérisé en ce qu'**un élément de temporisation (13) est prévu, qui retarde la deuxième valeur de consigne (dₛₒₗₗ) avant qu'elle ne soit transmise au dispositif de détermination de grandeur de correction (14).

8. Dispositif de réglage de distance selon l'une quelconque des revendications précédentes 6 à 7, **caractérisé en ce qu'**une sortie du dispositif de détermination de grandeur de correction (14) est transmise à l'élément d'addition (18).

9. Dispositif de réglage de distance selon l'une quelconque des revendications précédentes 6 à 8, **caractérisé en ce qu'**une sortie du dispositif de détermination de grandeur de correction (14) est transmise à un élément d'addition (25) à la sortie du premier agencement de régulation (20), auquel est également transmise une grandeur de réglage du premier agencement de régulation (20).

10. Dispositif de réglage de distance selon l'une quelconque des revendications précédentes 5 à 9, **caractérisé en ce qu'**un deuxième agencement de régulation (30) est prévu, auquel sont transmises une troisième valeur de consigne (Xₛₒₗₗ) pour la distance d'un point d'usinage sur la surface de pièce (2) par rapport à la tête d'usinage laser (1) et la deuxième valeur de consigne (dₛₒₗₗ) ou une deuxième composante de la deuxième valeur de consigne (dₛₒₗₗ) est transmise à un deuxième agencement de régulation (30) dans la même direction que la troisième valeur de consigne (Xₛₒₗₗ).

11. Dispositif de réglage de distance selon la revendication 10, **caractérisé en ce qu'**un dispositif de détermination de composante (32) est prévu, auquel la deuxième valeur de consigne (dₛₒₗₗ) est transmise et qui détermine une composante de la deuxième valeur de consigne (dₛₒₗₗ), laquelle est transmise au deuxième agencement de régulation (30).

12. Dispositif de réglage de distance selon l'une quelconque des revendications précédentes 10 à 11, **caractérisé en ce que** le premier et/ou le deuxième agencement de régulation (20, 30) comporte un régulateur de position (24, 36).

13. Dispositif de réglage de distance selon l'une quelconque des revendications précédentes 10 à 12, **caractérisé en ce que** le premier ou le deuxième agencement de régulation (20, 30) comporte une commande anticipée (21, 33).
